# FASCICULE DE BREVET EUROPEEN

(11) **EP 4 126 662 B1**
(45) Date de publication et mention de la délivrance du brevet: **28.08.2024**
(21) Numéro de dépôt: 21718943.0
(22) Date de dépôt: 18.03.2021
(51) Int. Cl.: B64C 19/00, B64C 19/02, B64C 25/42

(54) **SYSTÈME DE GESTION DE LA DECELERATION D'UN AERONEF SUR UNE PISTE AU SOL ET PROCEDE ASSOCIE**
SYSTEM ZUR VERWALTUNG DER VERZÖGERUNG EINES FLUGZEUGS AUF EINER LANDEBAHN UND ZUGEHÖRIGES VERFAHREN
SYSTEM FOR MANAGING THE DECELERATION OF AN AIRCRAFT ON A RUNWAY AND ASSOCIATED METHOD

(30) Priorité: 27.03.2020 FR 2003016
(43) Date de publication de la demande: 08.02.2023
(73) Titulaire: SAFRAN AIRCRAFT ENGINES, 75015 Paris (FR); SAFRAN ELECTRONICS & DEFENSE, 92100 Boulogne Billancourt (FR); Safran Landing Systems, 78140 Vélizy-Villacoublay (FR); Safran Nacelles, 76700 Gonfreville-l'Orcher (FR)
(72) Inventeur: MAALIOUNE, Hakim, 77550 MOISSY-CRAMAYEL (FR); MIRALLES, Laurent Christian Vincent Roger, 77550 MOISSY-CRAMAYEL (FR); BASTIDE, Christophe, 77550 MOISSY-CRAMAYEL (FR); FERT, Jérémy Edmond, 77550 MOISSY-CRAMAYEL (FR); HUPIN, Vincent, 77550 MOISSY-CRAMAYEL (FR)
(74) Mandataire: Cabinet Camus Lebkiri
(86) Numéro de dépôt international: PCT/FR2021/050446
(87) Numéro de publication internationale: WO 2021/191530

(56) Documents cités:
- EP-A2- 0 895 929
- EP-A2- 2 514 647
- WO-A1-02/47977
- FR-A1- 2 936 079

## Description

### DOMAINE TECHNIQUE DE L'INVENTION

Le domaine technique de l'invention est celui des aéronefs et plus particulièrement celui des systèmes de gestion de la décélération d'un aéronef sur une piste au sol.

La présente invention concerne un système de gestion de la décélération d'un aéronef sur une piste au sol et en particulier un système de gestion de la décélération d'un aéronef sur une piste au sol permettant le contrôle en temps réel de la position de l'aéronef sur un axe de freinage de la piste. La présente invention concerne également un procédé de contrôle mis en oeuvre par le système.

### ARRIERE-PLAN TECHNOLOGIQUE DE L'INVENTION

Les sorties de piste d'aéronefs sont nombreuses, de l'ordre d'une sortie de piste par mois dans le monde, et dues, dans environ 25% des cas, à un mauvais choix de pilotage lors d'un atterrissage dans des conditions météorologiques dégradées.

Face à cela, les autorités aéronautiques requièrent la mise en place de solutions pour réduire le nombre de sorties de piste, et en particulier le nombre de sorties de piste longitudinales.

Les sorties de piste longitudinales sont liées à une mauvaise gestion des moyens de freinage permettant de freiner l'aéronef, lorsque les conditions au niveau de la piste sont dégradées.

Actuellement, les différents moyens de freinage sont gérés indépendamment les uns des autres et manuellement par le pilote, puisque tous les moyens de freinage ne sont pas automatisés et que les moyens de freinage automatisés ne sont pas automatisés de manière compatible.

Ainsi, c'est le pilote qui doit gérer la configuration de chacun des moyens de freinage. Le risque de sorties de piste longitudinales en cas de conditions météorologiques dégradées est donc élevé puisque la gestion des moyens de freinage repose entièrement sur le pilote et son expérience.

Un procédé de contrôle de la décélération au sol d'un aéronef est décrit dans le document EP 2 514 647 A2. Dans ce procédé, la commande de décélération est déterminée en fonction d'une position et d'une vitesse d'aboutissement présélectionnées, ce qui implique que le procédé ne peut être mis en oeuvre que par un système automatique de freinage BTV, dans le cadre d'un atterrissage en pilotage automatique, sans intervention du pilote. Or, de nos jours, les atterrissages sont toujours réalisés par le pilote.

Il existe donc un besoin d'un système permettant de gérer les moyens de freinage d'un aéronef en phase de décélération pour limiter le risque d'une sortie de piste longitudinale.

### RESUME DE L'INVENTION

L'invention offre une solution aux problèmes évoqués précédemment, en proposant un système de gestion de la décélération d'un aéronef limitant le risque de sorties de piste longitudinales.

Un premier aspect de l'invention concerne un système de gestion de la décélération d'un aéronef sur une piste au sol permettant le contrôle en temps réel de la position de l'aéronef sur un axe de freinage de la piste, comportant :
- Des moyens de freinage configurés pour freiner l'aéronef ;
- Un calculateur configuré pour :
   - Calculer, à partir de données d'aéronef et de données extérieures comportant des données d'état de la piste et des données météorologiques au sol, une séquence d'utilisation des moyens de freinage destinée à freiner l'aéronef selon l'axe de freinage sur une distance de freinage prédéterminée associée à une durée de freinage prédéterminée comportant une pluralité d'instants de freinage chacun associés à une position prédéterminée sur l'axe de freinage ;
   - Mettre à jour en temps réel la séquence d'utilisation en fonction de l'écart, selon l'axe de freinage, entre la position de l'aéronef et la position prédéterminée associées à un instant de freinage donné ou de la survenue d'un événement donné ;
- Des moyens de contrôle configurés pour contrôler les moyens de freinage en fonction de la séquence d'utilisation ou d'une consigne envoyée par un système d'alerte de sortie de piste de l'aéronef.

Grâce à l'invention, le calculateur calcule une séquence d'utilisation des moyens de freinage permettant de freiner l'aéronef sur une distance de freinage prédéterminée selon un axe de freinage de la piste et qui prend en compte, d'une part les données de l'aéronef, et d'autre part, les données relatives à l'état de la piste et aux conditions météorologiques au sol. La séquence d'utilisation est ensuite mise à jour quand un écart selon l'axe de freinage entre la position de l'aéronef et la position prédéterminée pour un instant de freinage donné est constaté, dû par exemple à un écart entre les données extérieures utilisées pour le calcul et les données extérieures réelles. Cette mise à jour est réalisée en temps réel, c'est-à-dire à des instants très rapprochés, pour que l'écart n'ait pas le temps de s'accentuer d'une manière telle qu'il ne serait plus possible de corriger la position de l'aéronef selon l'axe de freinage avant une sortie de piste longitudinale. Les moyens de freinage sont contrôlés par les moyens de contrôle selon la séquence d'utilisation dans le cas nominal ou selon une consigne d'alerte provenant d'un système d'alerte de sortie de piste en cas d'urgence.

Outre les caractéristiques qui viennent d'être évoquées dans le paragraphe précédent, le système selon un premier aspect de l'invention peut présenter une ou plusieurs caractéristiques complémentaires parmi les suivantes, considérées individuellement ou selon toutes les combinaisons techniquement possibles.

Selon une variante de réalisation, les moyens de freinage comportent une pluralité d'inverseurs de poussée équipés chacun sur un moteur de l'aéronef et une pluralité de trains d'atterrissage comprenant chacun au moins une roue.

Selon une sous-variante de réalisation compatible avec la variante de réalisation précédente, les moyens de freinage comportent en outre une pluralité d'aérofreins équipés chacun sur une aile de l'aéronef.

Selon un premier mode de réalisation compatible avec la variante de réalisation précédente, les moyens de contrôle comportent un unique contrôleur central.

Ainsi, le contrôleur central est configuré pour contrôler chaque moyen de freinage en fonction de la séquence d'utilisation ou d'une consigne. Le nombre de calculateurs et donc la masse des moyens de contrôle est minimisée, ce qui permet notamment de limiter la consommation de carburant.

Selon un deuxième mode de réalisation compatible avec la variante de réalisation précédente, les moyens de contrôle comportent un contrôleur central et un contrôleur par moyen de freinage ou par type de moyen de freinage.

Ainsi, chaque contrôleur est configuré pour contrôler un unique moyen de freinage, par exemple un inverseur de poussée donné, ou un unique type de moyen de freinage, par exemple l'ensemble des inverseurs de poussée, et le contrôleur central est configuré pour contrôler chacun des contrôleurs en fonction de la séquence d'utilisation ou d'une consigne. Il suffit donc d'équiper les aéronefs existants d'un calculateur central pour que le système de contrôle soit implémenté.

Selon une variante de réalisation compatible avec les variantes et modes de réalisation précédents, l'aéronef comporte des moteurs et en ce que les données d'aéronef comportent la vitesse de l'aéronef et/ou des données de disponibilité des moyens de freinage et/ou des données d'utilisation des moteurs.

Ainsi, le calcul de la séquence d'utilisation prend en compte la vitesse actuelle de l'aéronef et la vitesse à venir de l'aéronef, à travers les informations sur les moyens de freinage qui pourraient être utilisés et l'utilisation des moteurs, et donc le taux de décélération de l'aéronef.

Selon une sous-variante de réalisation de la variante de réalisation précédente, les données de disponibilité d'un moyen de freinage comportent des données relatives à l'état du moyen de freinage et/ou des données relatives au coût d'utilisation du moyen de freinage.

Ainsi, le calcul de la séquence d'utilisation prend en compte la capacité de fonctionnement de chaque moyen de freinage et/ou son coût d'utilisation, par exemple à travers l'usure que l'utilisation engendre sur le moyen de freinage et/ou la consommation de carburant qu'entraîne l'utilisation du moyen de freinage.

Selon une variante de réalisation compatible avec les variantes et modes de réalisation précédents, le système comporte des premiers moyens de communication configurés pour communiquer avec une station au sol.

Ainsi, le système peut obtenir les données extérieures de la tour de contrôle en charge des décollages et atterrissages sur la piste, conformément à la réglementation.

Selon une variante de réalisation compatible avec les variantes et modes de réalisation précédents, le système comporte des deuxièmes moyens de communication configurés pour communiquer avec au moins un autre aéronef.

Ainsi, le calculateur peut utiliser des séquences d'utilisation calculées par d'autres aéronefs ayant précédemment atterris ou décollés sur la piste et lui ayant été transmis pour calculer la séquence d'utilisation.

Un deuxième aspect de l'invention concerne un procédé de contrôle en temps réel de la position d'un aéronef sur un axe de freinage d'une piste au sol mis en oeuvre par le système selon le premier aspect de l'invention, comportant les étapes suivantes :
- Calcul, par le calculateur, à partir de données d'aéronef et de données extérieures comportant des données d'état de la piste et des données météorologiques au sol, une séquence d'utilisation des moyens de freinage destinée à freiner l'aéronef selon l'axe de freinage sur une distance de freinage prédéterminée associée à une durée de freinage prédéterminée comportant une pluralité d'instants de freinage chacun associés à une position prédéterminée sur l'axe de freinage ;
- Si, à un instant de freinage donné, l'écart selon l'axe de freinage, entre la position de l'aéronef et la position prédéterminée est supérieur à un seuil ou si un événement donné survient, mise à jour, par le calculateur, de la séquence d'utilisation ;
- Mise en oeuvre de la séquence d'utilisation des moyens de freinage par les moyens de contrôle.

Ainsi, la séquence d'utilisation est mise à jour quand l'écart entre la position de l'aéronef et la position prédéterminée sur l'axe de freinage devient supérieur à une valeur seuil à un instant de freinage donné.

Selon une variante de réalisation, la séquence d'utilisation est mise en oeuvre automatiquement ou manuellement.

Ainsi, le pilote peut choisir de mettre lui-même en oeuvre la séquence d'utilisation.

Selon une variante de réalisation compatible avec la variante de réalisation précédente, la séquence d'utilisation est calculée en vol.

Ainsi, si le calculateur ne parvient pas à calculer une séquence d'utilisation correspondant à la distance de freinage prédéterminée, par exemple parce que la distance de freinage prédéterminée est trop courte compte tenu de la vitesse de l'aéronef et de ses moyens de freinage, le calculateur peut enclencher une consigne de rejet d'atterrissage ou de décollage.

Un troisième aspect de l'invention concerne un produit-programme d'ordinateur comprenant des instructions qui, lorsque le programme est exécuté par un ordinateur, conduisent celui-ci à mettre en oeuvre les étapes du procédé selon le deuxième aspect de l'invention.

Un quatrième aspect de l'invention concerne un support d'enregistrement lisible par ordinateur comprenant des instructions qui, lorsqu'elles sont exécutées par un ordinateur, conduisent celui-ci à mettre en oeuvre les étapes du procédé selon le deuxième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un aéronef.
- La figure 2 montre une représentation schématique du système de contrôle selon le premier mode de réalisation.
- La figure 3 montre une représentation schématique du système de contrôle selon le deuxième mode de réalisation.
- La figure 4 est un schéma synoptique illustrant les étapes du procédé de contrôle.
- La figure 5 montre une représentation schématique de la position à plusieurs instants d'un aéronef équipé du système de contrôle, sur un axe de freinage d'une piste.

### DESCRIPTION DETAILLEE

Sauf précision contraire, un même élément apparaissant sur des figures différentes présente une référence unique.

Un premier aspect de l'invention concerne un système de gestion de la décélération d'un aéronef sur une piste au sol permettant le contrôle en temps réel de la position de l'aéronef sur un axe de freinage de la piste au sol.

L'objectif de l'invention est d'éviter une sortie de piste de l'aéronef, plus particulièrement lors de l'atterrissage de l'aéronef. Le système de contrôle permet donc d'arrêter l'aéronef avant qu'il ne sorte de la piste, c'est-à-dire de respecter une distance de freinage prédéterminée selon un axe de freinage compris dans la piste.

On entend par « distance de freinage », la distance parcourue par l'aéronef selon un axe de freinage, entre son atterrissage sur la piste et son arrêt sur la piste, c'est-à-dire la distance parcourue par l'aéronef pendant une durée de freinage comportant une pluralité d'instants de freinage compris entre l'instant auquel l'aéronef atterrit sur la piste et l'instant auquel l'aéronef s'arrête sur la piste.

L'invention peut également être mise en oeuvre dans le cas d'un rejet de décollage, par exemple quand l'aéronef n'a pas une vitesse suffisante pour décoller et doit freiner d'urgence pour empêcher une sortie de piste. La distance de freinage est alors la distance parcourue par l'aéronef entre l'instant auquel au moins un premier moyen de freinage est activé et l'instant auquel l'aéronef s'arrête sur la piste.

La distance de freinage prédéterminée est la distance parcourue par l'aéronef selon un axe de freinage, pendant une durée de freinage prédéterminée comportant une pluralité d'instants associés chacun à une position prédéterminée sur l'axe de freinage correspondant à la position à laquelle devrait être l'aéronef à l'instant de freinage donné pour que l'aéronef s'arrête à la distance de freinage prédéterminée.

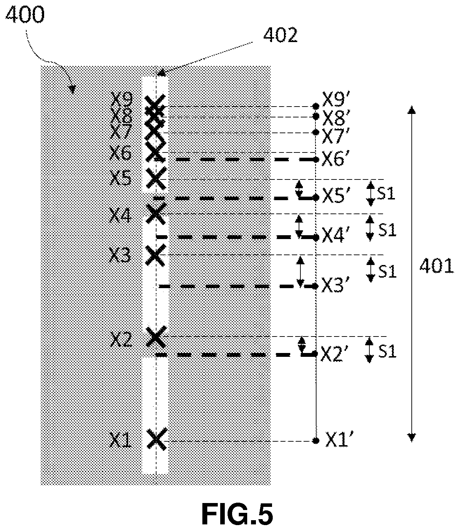

[Fig. 5] La figure 5 montre une représentation schématique de la position à plusieurs instants de freinage, d'un aéronef équipé du système de contrôle, sur un axe de freinage 402 sur une piste 400.

Sur la figure 5, la distance de freinage prédéterminée 401 est selon un axe de freinage 402 longitudinal passant par le milieu de la piste 400 et est associée à une durée de freinage comportant 9 instants de freinage, chacun correspondant à une position prédéterminée X1', X2', X3', X4', X5', X6', X7', X8', X9' sur l'axe de freinage 402.

Dans le cas de l'atterrissage, la distance de freinage prédéterminée 401 est par exemple la distance entre le point d'atterrissage de l'aéronef sur la piste 400 et la distance correspondant à un pourcentage donné de la piste 400, comme par exemple aux trois quarts de la piste 400 ou encore aux sept huitièmes de la piste 400.

La distance de freinage prédéterminée 401 peut également dépendre de l'état de la piste 400, par exemple des zones pouvant influer sur le freinage de l'aéronef, comme des zones présentant des creux ou des bosses susceptibles de ralentir l'aéronef ou encore du coefficient de friction de la piste 400 fourni par une tour de contrôle au sol .

La distance de freinage prédéterminée 401 est par exemple déterminée à partir d'abaques de performances de l'aéronef 100 donnant une distance de freinage en fonction de la configuration des moyens de freinage.

On entend par « contrôle en temps réel de la position de l'aéronef sur un axe de freinage » que les données relatives à la position de l'aéronef sont traitées immédiatement après leur acquisition, et que la durée entre l'acquisition des données de position et la production des consignes de contrôle permettant de régler la position réelle de l'aéronef sur la position prédéterminée à un instant de freinage donné est réduite au minimum. La durée est par exemple de l'ordre de 2,5 à 20 ms.

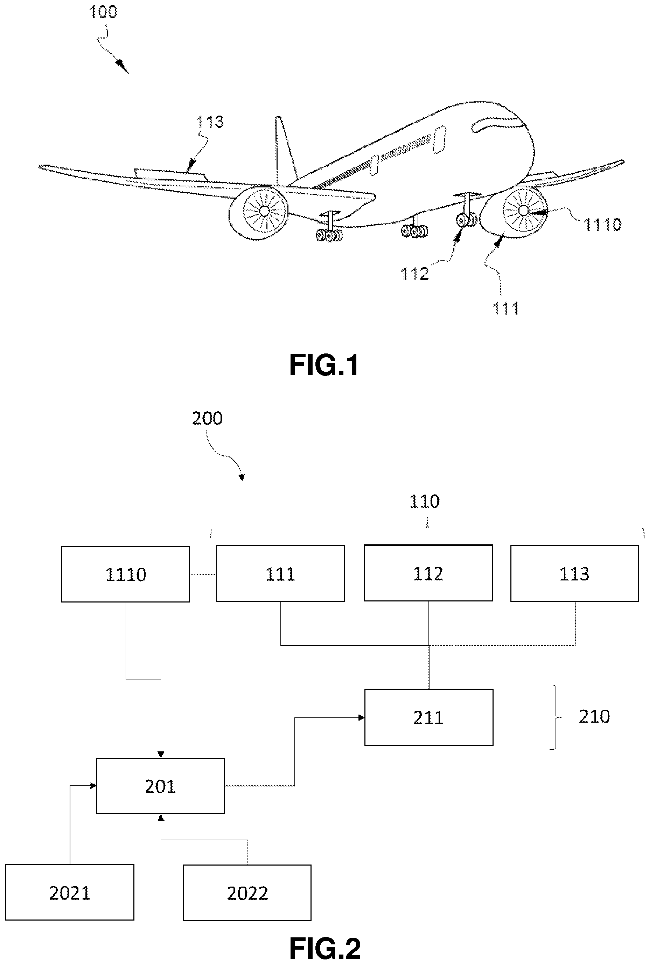

[Fig. 2] La figure 2 montre une représentation schématique du système de contrôle 200 selon un premier mode de réalisation.

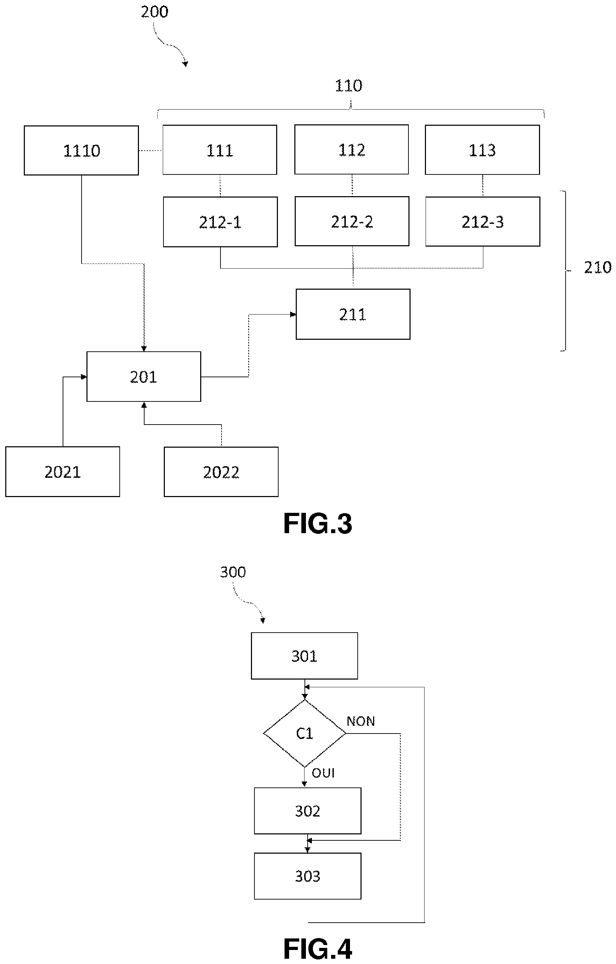

[Fig. 3] La figure 3 montre une représentation schématique du système de contrôle 200 selon un deuxième mode de réalisation.

Comme illustré sur la figure 2, le système de contrôle 200 comporte :
- Des moyens de freinage 110 ;
- Un calculateur 201 ;
- Des moyens de contrôle 210 comportant au moins un calculateur central 211.

Les moyens de freinage 110 sont configurés pour freiner l'aéronef, c'est-à-dire pour diminuer la vitesse de l'aéronef.

[Fig. 1] La figure 1 montre une représentation schématique d'un aéronef 100.

Comme illustré sur la figure 1, les moyens de freinage 110 comportent une pluralité d'inverseurs de poussée 111 et une pluralité de trains d'atterrissage 112. L'aéronef 100 comporte une pluralité de moteurs 1110. Chaque inverseur de poussée est monté sur un moteur 1110 mais chaque moteur 1110 n'est pas forcément équipé d'un inverseur de poussée 111. Le train d'atterrissage 112 comporte au moins une roue.

L'aéronef 100 comporte alors un premier type de moyens de freinage 110 correspondant aux inverseurs de poussée 111 et un deuxième type de moyens de freinage 110 correspondant aux trains d'atterrissage 112.

Les moyens de freinage 110 peuvent également comporter une pluralité d'aérofreins 113, comme sur la figure 1, chaque aile de l'aéronef 100 étant équipé d'au moins un aérofrein 113.

L'aéronef 100 comporte alors en outre un troisième type de moyens de freinage 110 correspondant aux aérofreins 113.

Le calculateur 201 est configuré pour calculer une séquence d'utilisation des moyens de freinage 110 permettant de freiner l'aéronef 100 sur la distance de freinage prédéterminée 401.

On entend par « séquence d'utilisation des moyens de freinage 110 », une suite ordonnée d'utilisation des moyens de freinage 110 comprenant l'activation/désactivation des différents moyens de freinage 110 et leurs caractéristiques d'utilisation, comme par exemple la puissance d'utilisation pour les inverseurs de poussée 111, le niveau de décélération pour les trains d'atterrissage 112 ou encore l'angle pour les aérofreins 113.

Si l'on prend l'exemple d'un aéronef 100 atterrissant à l'une extrémité d'une piste 400 et stationnant à l'autre extrémité de la piste 400, la séquence d'utilisation comporte par exemple, entre le point d'atterrissage de l'aéronef 100 et le milieu de la piste 400, l'utilisation des inverseurs de poussée 111 avec une première puissance donnée et des aérofreins 113 selon un angle donné, puis, entre le milieu de la piste et le point de stationnement, l'utilisation des trains d'atterrissage 112 avec un niveau de décélération donné et des inverseurs de poussée 111 avec une deuxième puissance donnée.

La séquence d'utilisation est par exemple calculée en vol avant l'atterrissage ou au moment de l'atterrissage de l'aéronef 100, lors du premier contact entre la piste 400 et l'aéronef 100.

La séquence d'utilisation est par exemple calculée au sol au moment du décollage.

Dans le cas où la séquence d'utilisation est calculée en vol, si le calculateur 201 ne parvient pas à calculer une séquence d'utilisation qui n'entraîne pas une sortie de piste de l'aéronef 100, par exemple parce que la distance de freinage prédéterminée 401 est trop courte compte tenu de la vitesse de l'aéronef 100 et/ou des moyens de freinage 110 de l'aéronef 100, le calculateur 201 peut générer une alerte conseillant au pilote de ne pas atterrir.

La séquence d'utilisation est calculée à partir de données d'aéronef, c'est-à-dire de données relatives à l'aéronef, et de données extérieures, c'est-à-dire de données relatives aux conditions extérieures à l'aéronef 100.

Les données extérieures comportent des données relatives à l'état de la piste 400, par exemple le coefficient de friction de la piste 400, et des données relatives aux conditions météorologiques au niveau de la piste 400, par exemple la force et la direction du vent.

Les données extérieures sont par exemple obtenues d'une tour de contrôle au sol en charge de la piste 400. Dans ce cas, le système 200 comporte des premiers moyens de communication 2021 permettant de communiquer avec la tour de contrôle et de manière générale avec une station au sol.

Les données d'aéronef comportent par exemple la vitesse de l'aéronef 100, des données relatives à la disponibilité des moyens de freinage 110, par exemple si un moyen de freinage 110 donné est en panne ou fonctionne et/ou des données relatives à l'utilisation par l'aéronef 100 de ses moteurs 1110, par exemple la puissance délivrée par chaque moteur 1110.

Les données relatives à la disponibilité d'un certain moyen de freinage 110 comportent des données relatives à l'état du moyen de freinage 110, par exemple si le moyen de freinage 110 fonctionne ou est en panne ou encore le taux d'usure du moyen de freinage 110, et/ou des données relatives au coût d'utilisation du moyen de freinage 110, par exemple la consommation de carburant liée à l'utilisation du moyen de freinage110 ou encore le prix de remplacement du moyen de freinage 110.

Le choix des données d'aéronef utilisées pour calculer la séquence d'utilisation est par exemple effectué par le pilote ou par la compagnie aérienne.

La séquence d'utilisation peut également être calculée à partir de données en provenance d'autres aéronefs 100, par exemple d'aéronefs 100 ayant déjà atterris sur la piste 400. Dans ce cas, le système 200 comporte des deuxièmes moyens de communication 2022 permettant de communiquer avec les autres aéronefs 100.

Le calculateur 201 est également configuré pour mettre à jour la séquence d'utilisation en temps réel en fonction de l'écart entre la position de l'aéronef 100 et la position prédéterminée 401 selon l'axe de freinage 402 à un instant de freinage donné.

Par exemple, si l'on reprend l'exemple développé précédemment, si un vent pousse l'aéronef 100 vers l'avant avec une intensité supérieure à l'intensité prévue, c'est-à-dire supérieure à l'intensité qui avait été utilisée pour calculer la séquence d'utilisation, la séquence d'utilisation est par exemple mise à jour pour compenser l'intensité du vent, par exemple en augmentant la puissance des inverseurs de poussée 111.

Le calculateur 201 est également configuré pour mettre à jour la séquence d'utilisation en fonction d'un événement donné. L'événement est par exemple la panne d'un moyen de freinage 110 utilisé dans la séquence d'utilisation, ou encore la panne d'un moteur 1110.

Les moyens de contrôle 210 sont configurés pour contrôler les moyens de freinage 110 en fonction de la séquence d'utilisation ou d'une consigne provenant d'un système d'alerte de sortie de piste.

Le système d'alerte de sortie de piste est par exemple un système ROAAS pour « Runway Overrun Alert and Awareness System » équipé sur l'aéronef 100.

La consigne est par exemple de mettre en oeuvre une séquence de freinage maximal quand un danger a été détecté.

Selon le premier mode de réalisation du système 200 illustré à la figure 2, les moyens de contrôle 210 comportent un unique contrôleur central 211 configuré pour contrôler l'ensemble des moyens de freinage 110.

Selon le deuxième mode de réalisation du système 200, les moyens de contrôle 210 comportent un contrôleur central 211 et un contrôleur 212 par moyen de freinage 110 ou par type de moyen de freinage 110 configuré pour contrôler le moyen de freinage ou le type de moyen de freinage sur consigne du contrôleur central 211.

Sur la figure 3, les moyens de contrôle 210 comportent un contrôleur central 211, un contrôleur 212-1 configuré pour contrôler les inverseurs de poussée 111, un contrôleur 212-2 configuré pour contrôler les trains d'atterrissage 112 et un contrôleur 212-3 configuré pour contrôler les aérofreins 113.

Un deuxième aspect de l'invention concerne un procédé de contrôle en temps réel de la position de l'aéronef sur l'axe de freinage 402 mis en oeuvre par le système 200 selon le premier aspect de l'invention.

[Fig. 4] La figure 4 est un schéma synoptique illustrant les étapes du procédé 300 selon le deuxième aspect de l'invention.

Une première étape 301 du procédé 300 mise en oeuvre par le calculateur 201, consiste à calculer la séquence d'utilisation des moyens de freinage 110 en fonction des données d'aéronef et des données extérieures.

Si, pour un instant de freinage de la durée de freinage prédéterminée, une première condition C1 est réalisée, c'est-à-dire si l'écart selon l'axe de freinage 402, entre la position X1, X2, X3, X4, X5, X6, X7, X8, X9 de l'aéronef 100 et la position prédéterminée X1', X2', X3', X4', X5', X6', X7', X8', X9' associées à l'instant de freinage est supérieur à un seuil S1, une deuxième étape 302 du procédé 300 est réalisée.

Si la première condition C1 n'est pas réalisée, une troisième étape 303 du procédé est réalisée.

Le seuil S1 est choisi de telle manière qu'il soit encore possible de corriger la position de l'aéronef 100 sur l'axe de freinage 402 avant une sortie de piste longitudinale.

Le seuil S1 est par exemple la valeur nulle.

La deuxième étape 302 du procédé 300 mise en oeuvre par le calculateur 201, consiste à mettre à jour la séquence d'utilisation. Ainsi, si par exemple, à un instant de freinage donné, la position X1, X2, X3, X4, X5, X6, X7, X8, X9 de l'aéronef 100 est plus loin sur la piste que la position prédéterminée X1', X2', X3', X4', X5', X6', X7', X8', X9', par exemple parce que l'intensité du vent poussant l'aéronef 100 vers l'avant a été sous-estimée, la séquence d'utilisation est mise à jour pour freiner davantage l'aéronef 100.

La deuxième étape 302 du procédé 300 est suivie de la troisième étape 303.

Une troisième étape 303 du procédé 300 mise en oeuvre par les moyens de contrôle 210, consiste à mettre en oeuvre la séquence d'utilisation sur les moyens de freinage 110.

La mise en oeuvre de la séquence d'utilisation des moyens de freinage 110 peut être réalisée automatiquement ou manuellement par le pilote de l'aéronef 100.

Dans le cas où la mise en oeuvre est manuelle, des indications pourront être fournies pour assister le pilote.

Un exemple de mise en oeuvre est illustré sur la figure 5. La position d'un aéronef 100 selon l'axe de freinage 402 y est représentée à plusieurs instants, un point Xi correspondant à une position de l'aéronef 100 à un instant donné.

Sur la figure 5, l'aéronef 100 atterrit en un point X1 de la piste 400. La séquence d'utilisation des moyens de freinage 100 a été calculée en vol pour permettre à l'aéronef 100 de freiner sur la distance de freinage prédéterminée 401.

A chaque instant, on vérifie si la première condition C1 est réalisée. A l'instant correspondant au point X2, l'écart entre la position X2 de l'aéronef 100 et la position prédéterminée X2' selon l'axe de freinage 402 est inférieur au seuil S1. La séquence d'utilisation n'est donc pas mise à jour et les moyens de contrôle 210 mettent donc en oeuvre la séquence d'utilisation calculée en vol.

A l'instant correspondant au point X3, l'écart selon l'axe de freinage 402 entre la position X3 de l'aéronef 100 et la position prédéterminée X3' est supérieur au seuil S1. La séquence d'utilisation est donc mise à jour. A partir de l'instant correspondant au point X4, les moyens de contrôle 210 mettent en oeuvre la séquence d'utilisation mise à jour au point X3.

Jusqu'à l'instant correspondant au point X9, point de stationnement, l'écart selon l'axe de freinage 402 entre la position X4, X5, X6, X7, X8, X9 de l'aéronef 100 et la position prédéterminée X4', X5', X6', X7', X8', X9' est inférieur au seuil S1 et la séquence d'utilisation n'est donc pas remise à jour entre l'instant correspondant au point X3 et le stationnement de l'aéronef 100.

## Revendications

1. Système (200) de gestion de la décélération d'un aéronef (100) sur une piste (400) au sol permettant le contrôle en temps réel de la position (X1, X2, X3, X4, X5, X6, X7, X8, X9) de l'aéronef (100) sur un axe de freinage (402) de la piste (400), comportant :
- Des moyens de freinage (110) configurés pour freiner l'aéronef (100) ;
- Un calculateur (201) configuré pour :
∘ Calculer, à partir de données d'aéronef et de données extérieures comportant des données d'état de la piste (400) et des données météorologiques au sol, une séquence d'utilisation des moyens de freinage (110) destinée à freiner l'aéronef (100) selon l'axe de freinage (402), sur une distance de freinage prédéterminée (401) associée à une durée de freinage prédéterminée comportant une pluralité d'instants de freinage chacun associés à une position prédéterminée (X1', X2', X3', X4', X5', X6', X7', X8', X9') sur l'axe de freinage (402), la séquence d'utilisation des moyens de freinage (110) se définissant comme une suite ordonnée d'utilisation des moyens de freinage (110) comprenant l'activation/désactivation des différents moyens de freinage (110) et leurs caractéristiques d'utilisation ;
∘ Mettre à jour en temps réel la séquence d'utilisation en fonction de l'écart, selon l'axe de freinage (402), entre la position de l'aéronef (100) et la position prédéterminée (X1', X2', X3', X4', X5', X6', X7', X8', X9') associée à un instant de freinage donné, ou de la survenue d'un événement donné ;
- Des moyens de contrôle (210) configurés pour contrôler les moyens de freinage (110) en fonction de la séquence d'utilisation ou d'une consigne envoyée par un système d'alerte de sortie de piste de l'aéronef (100).

2. Système (200) selon la revendication 1, **caractérisé en ce que** les moyens de freinage (110) comportent une pluralité d'inverseurs de poussée (111) équipés chacun sur un moteur (1110) de l'aéronef (100) et une pluralité de trains d'atterrissage (112) comprenant chacun au moins une roue.

3. Système (200) selon la revendication 2, **caractérisé en ce que** les moyens de freinage (110) comportent en outre une pluralité d'aérofreins (113) équipés chacun sur une aile de l'aéronef (100).

4. Système selon l'une quelconque des revendications précédentes, **caractérisé en ce que** les moyens de contrôle (210) comportent un unique contrôleur central (211).

5. Système (200) selon l'une quelconque des revendications 1 à 3, **caractérisé en ce que** les moyens de contrôle (210) comportent un contrôleur central et un contrôleur (212) par moyen de freinage (110) ou par type de moyen de freinage (110).

6. Système (200) selon l'une quelconque des revendications précédentes, **caractérisé en ce que** l'aéronef (100) comporte des moteurs et **en ce que** les données d'aéronef comportent la vitesse de l'aéronef (100) et/ou des données de disponibilité des moyens de freinage (110) et/ou des données d'utilisation des moteurs (1110).

7. Système (200) selon la revendication 6, **caractérisé en ce que** les données de disponibilité d'un moyen de freinage (110) comportent des données relatives à l'état du moyen de freinage (110) et/ou des données relatives au coût d'utilisation du moyen de freinage (110).

8. Système (200) selon l'une quelconque des revendications précédentes, **caractérisé en ce qu'**il comporte des premiers moyens de communication (2021) configurés pour communiquer avec une station au sol.

9. Système selon l'une quelconque des revendications précédentes, **caractérisé en ce qu'**il comporte des deuxièmes moyens de communication (2022) configurés pour communiquer avec au moins un autre aéronef (100).

10. Procédé (300) de contrôle en temps réel de la position (X1, X2, X3, X4, X5, X6, X7, X8, X9) d'un aéronef (100) sur un axe de freinage (402) d'une piste (400) au sol mis en oeuvre par le système (200) selon l'une quelconque des revendications précédentes, comportant les étapes suivantes :
- Calcul (301), par le calculateur (201), à partir de données d'aéronef et de données extérieures comportant des données d'état de la piste et des données météorologiques au sol, une séquence d'utilisation des moyens de freinage (110) destinée à freiner l'aéronef (100) selon l'axe de freinage (402), sur une distance de freinage prédéterminée (401) associée à une durée de freinage prédéterminée comportant une pluralité d'instants de freinage chacun associés à une position prédéterminée (X1', X2', X3', X4', X5', X6', X7', X8', X9') sur l'axe de freinage (402) ;
- Si, à un instant de freinage donné, l'écart selon l'axe de freinage (402) entre la position de l'aéronef (100) et la position prédéterminée (X1 ', X2', X3', X4', X5', X6', X7', X8', X9') est supérieur à un seuil (S1, C1) ou si un événement donné survient, mise à jour (302), par le calculateur (201), de la séquence d'utilisation ;
- Mise en oeuvre (303) de la séquence d'utilisation des moyens de freinage (110) par les moyens de contrôle (210).

11. Procédé (300) selon la revendication 10, **caractérisé en ce que** la séquence d'utilisation est mise en oeuvre automatiquement ou manuellement.

12. Procédé (300) selon l'une quelconque des revendications 10 ou 11, **caractérisé en ce que** la séquence d'utilisation est calculée en vol.

13. Produit-programme d'ordinateur comprenant des instructions qui, lorsque le programme est exécuté par un ordinateur, conduisent celui-ci à mettre en oeuvre les étapes du procédé (300) selon l'une quelconque des revendications 10 ou 11.

14. Support d'enregistrement lisible par ordinateur comprenant des instructions qui, lorsqu'elles sont exécutées par un ordinateur, conduisent celui-ci à mettre en oeuvre les étapes du procédé (300) selon l'une quelconque des revendications 10 ou 11.

## Patentansprüche

1. System (200) zur Steuerung der Verzögerung eines Luftfahrzeugs (100) auf einer Start- und Landebahn (400) am Boden, das die Echtzeitkontrolle der Position (X1, X2, X3, X4, X5, X6, X7, X8, X9) des Luftfahrzeugs (100) auf einer Bremsachse (402) der Start- und Landebahn (400) ermöglicht, umfassend:
- Bremsmittel (110), die so konfiguriert sind, dass sie das Luftfahrzeug (100) bremsen;
- einen Rechner (201), der konfiguriert ist für das:
∘ Berechnen, ausgehend von Luftfahrzeugdaten und externen Daten, die Daten über den Zustand der Start- und Landebahn (400) und meteorologische Daten am Boden umfassen, einer Verwendungssequenz der Bremsmittel (110), die dazu bestimmt ist, das Luftfahrzeug (100) entlang der Bremsachse (402) über eine vorbestimmte Bremsstrecke (401) abzubremsen, die mit einer vorbestimmten Bremsdauer verbunden ist, die eine Vielzahl von Bremszeitpunkten umfasst, die jeweils einer vorbestimmten Position (X1', X2', X3', X4', X5', X6', X7', X8', X9') auf der Bremsachse (402) zugeordnet sind, wobei die Verwendungssequenz der Bremsmittel (110) als eine geordnete Folge der Verwendung der Bremsmittel (110) definiert ist, die die Aktivierung/Deaktivierung der verschiedenen Bremsmittel (110) und ihre Verwendungscharakteristika umfasst;
∘ Aktualisieren der Verwendungssequenz in Echtzeit in Abhängigkeit von der Abweichung entlang der Bremsachse (402) zwischen der Position des Luftfahrzeugs (100) und der vorbestimmten Position (X1', X2', X3', X4', X5', X6', X7', X8', X9'), die einem gegebenen Bremszeitpunkt zugeordnet ist, oder des Eintretens eines gegebenen Ereignisses;
- Kontrollmittel (210), die so konfiguriert sind, dass sie die Bremsmittel (110) in Abhängigkeit von der Verwendungssequenz oder einer Vorgabe kontrollieren, die von einem Warnsystem für das Verlassen der Start- und Landebahn des Luftfahrzeugs (100) gesendet wird.

2. System (200) nach Anspruch 1, **dadurch gekennzeichnet, dass** die Bremsmittel (110) eine Vielzahl von Schubumkehrern (111), die jeweils an einem Triebwerk (1110) des Luftfahrzeugs (100) eingebaut sind, und eine Vielzahl von Fahrwerken (112) umfassen, die jeweils mindestens ein Rad umfassen.

3. System (200) nach Anspruch 2, **dadurch gekennzeichnet, dass** die Bremsmittel (110) zusätzlich eine Vielzahl von Luftbremsen (113) umfassen, die jeweils an einem Flügel des Luftfahrzeugs (100) eingebaut sind.

4. System nach einem der vorhergehenden Ansprüche, **dadurch gekennzeichnet, dass** die Kontrollmittel (210) einen einzelnen zentralen Controller (211) umfassen.

5. System (200) nach einem der Ansprüche 1 bis 3, **dadurch gekennzeichnet, dass** die Steuermittel (210) einen zentralen Controller und einen Controller (212) pro Bremsmittel (110) oder pro Typ des Bremsmittels (110) umfassen.

6. System (200) nach einem der vorhergehenden Ansprüche, **dadurch gekennzeichnet, dass** das Luftfahrzeug (100) Triebwerke aufweist und dass die Luftfahrzeugdaten die Geschwindigkeit des Luftfahrzeugs (100) und/oder Daten über die Verfügbarkeit der Bremsmittel (110) und/oder Daten über die Nutzung der Triebwerke (1110) umfassen.

7. System (200) nach Anspruch 6, **dadurch gekennzeichnet, dass** die Daten über die Verfügbarkeit eines Bremsmittels (110) Daten über den Zustand des Bremsmittels (110) und/oder Daten über die Kosten für die Nutzung des Bremsmittels (110) umfassen.

8. System (200) nach einem der vorhergehenden Ansprüche, **dadurch gekennzeichnet, dass** es eine erste Kommunikationseinrichtung (2021) umfasst, die so konfiguriert ist, dass sie mit einer Bodenstation kommuniziert.

9. System nach einem der vorhergehenden Ansprüche, **dadurch gekennzeichnet, dass** es eine zweite Kommunikationseinrichtung (2022) umfasst, die so konfiguriert ist, dass sie mit mindestens einem anderen Luftfahrzeug (100) kommuniziert.

10. Verfahren (300) zur Echtzeitkontrolle der Position (X1, X2, X3, X4, X5, X6, X7, X8, X9) eines Luftfahrzeugs (100) auf einer Bremsachse (402) einer Start- und Landebahn (400) am Boden, das von dem System (200) nach einem der vorhergehenden Ansprüche durchgeführt wird, mit den folgenden Schritten:
- Berechnung (301) durch den Rechner (201), ausgehend von Luftfahrzeugdaten und externen Daten, die Daten über den Zustand der Start- und Landebahn und meteorologische Daten am Boden umfassen, einer Verwendungssequenz der Bremsmittel (110), die dazu bestimmt ist, das Luftfahrzeug (100) entlang der Bremsachse (402) über eine vorbestimmte Bremsstrecke (401) abzubremsen, wobei die Bremsstrecke mit einer vorbestimmten Bremsdauer verbunden ist, die eine Vielzahl von Bremszeitpunkten umfasst, die jeweils mit einer vorbestimmten Position (X1', X2', X3', X4', X5', X6', X7', X8', X9') auf der Bremsachse (402) verbunden sind;
- Wenn zu einem gegebenen Bremszeitpunkt die Abweichung entlang der Bremsachse (402) zwischen der Position des Luftfahrzeugs (100) und der vorbestimmten Position (X1', X2', X3', X4', X5', X6', X7', X8', X9') größer als ein Schwellenwert (S1, C1) ist oder wenn ein gegebenes Ereignis auftritt, aktualisiert (302) der Rechner (201) die Verwendungssequenz;
- Implementierung (303) der Verwendungssequenz der Bremsmittel (110) durch die Kontrollmittel (210).

11. Verfahren (300) nach Anspruch 10, **dadurch gekennzeichnet, dass** die Verwendungssequenz automatisch oder manuell implementiert wird.

12. Verfahren (300) nach einem der Ansprüche 10 oder 11, **dadurch gekennzeichnet, dass** die Verwendungssequenz während des Fluges berechnet wird.

13. Computerprogrammprodukt mit Anweisungen, die, wenn das Programm von einem Computer ausgeführt wird, diesen dazu veranlassen, die Schritte des Verfahrens (300) nach einem der vorhergehenden Ansprüche 10 oder 11 auszuführen.

14. Computerlesbares Aufzeichnungsmedium, das Anweisungen enthält, die, wenn sie von einem Computer ausgeführt werden, diesen dazu veranlassen, die Schritte des Verfahrens (300) nach einem der Ansprüche 10 oder 11 auszuführen.

## Claims

1. System (200) for managing the deceleration of an aircraft (100) on a runway (400) on the ground enabling the control in real time of the position (X1, X2, X3, X4, X5, X6, X7, X8, X9) of the aircraft (100) on a braking axis (402) of the runway (400), comprising:
- Braking means (110) configured to brake the aircraft (100);
- A calculator (201) configured to:
∘ Calculate, from aircraft data and from external data comprising data on the state of the runway (400) and meteorological data on the ground, a sequence of use of the braking means (110) intended to brake the aircraft (100) along the braking axis (402), over a predetermined braking distance (401) associated with a predetermined braking duration comprising a plurality of braking instants each associated with a predetermined position (X1', X2', X3', X4', X5', X6', X7', X8', X9') on the braking axis (402), the sequence of use of the braking means (110) being defined as an ordered series of use of the braking means (110) comprising the activation/deactivation of the different braking means (110) and their characteristics of use;
∘ Update in real time, the sequence of use as a function of the difference, along the braking axis (402), between the position of the aircraft (100) and the predetermined position (X1', X2', X3', X4', X5', X6', X7', X8', X9') associated with a given braking instant, or the occurrence of a given event;
- Control means (210) configured to control the braking means (110) as a function of the sequence of use or an instruction sent by a runway overrun alert system of the aircraft (100).

2. System (200) according to claim 1, **characterised in that** the braking means (110) comprise a plurality of thrust reversers (111) each equipped on an engine (1110) of the aircraft (100) and a plurality of landing gears (112) each comprising at least one wheel.

3. System (200) according to claim 2, **characterised in that** the braking means (110) further comprise a plurality of air brakes (113) each equipped on a wing of the aircraft (100).

4. System according to any of the preceding claims, **characterised in that** the control means (210) comprise a single central controller (211).

5. System (200) according to any of claims 1 to 3, **characterised in that** the control means (210) comprise a central controller and a controller (212) per braking means (110) or per type of braking means (110).

6. System (200) according to any of the preceding claims, **characterised in that** the aircraft (100) comprises engines and **in that** the aircraft data comprise the speed of the aircraft (100) and/or data of availability of the braking means (110) and/or data of use of the engines (1110).

7. System (200) according to claim 6, **characterised in that** the data of availability of a braking means (110) comprise data relative to the state of the braking means (110) and/or data relative to the cost of use of the braking means (110).

8. System (200) according to any of the preceding claims, **characterised in that** it comprises first communication means (2021) configured to communicate with a station on the ground.

9. System according to any of the preceding claims, **characterised in that** it comprises second communication means (2022) configured to communicate with at least one other aircraft (100).

10. Method (300) for controlling in real time the position (X1, X2, X3, X4, X5, X6, X7, X8, X9) of an aircraft (100) on a braking axis (402) of a runway (400) on the ground implemented by the system (200) according to any of the preceding claims, comprising the following steps:
- Calculating (301), by the calculator (201), from aircraft data and from external data comprising data on the state of the runway and meteorological data on the ground, a sequence of use of the braking means (110) intended to brake the aircraft (100) along the braking axis (402), over a predetermined braking distance (401) associated with a predetermined braking duration comprising a plurality of braking instants each associated with a predetermined position (X1', X2', X3', X4', X5', X6', X7', X8', X9') on the braking axis (402);
- If, at a given braking instant, the difference along the braking axis (402) between the position of the aircraft (100) and the predetermined position (X1', X2', X3', X4', X5', X6', X7', X8', X9') is above a threshold (S1, C1) or if a given event occurs, updating (302), by the calculator (201), of the sequence of use;
- Implementing (303) the sequence of use of the braking means (110) by the control means (210).

11. Method (300) according to claim 10, **characterised in that** the sequence of use is implemented automatically or manually.

12. Method (300) according to any of claims 10 or 11, **characterised in that** the sequence of use is calculated in flight.

13. Computer product-programme comprising instructions which, when the programme is executed by a computer, lead said computer to implement the steps of the method (300) according to any of claims 10 or 11.

14. Recording support readable by a computer comprising instructions which, when they are executed by a computer, lead said computer to implement the steps of the method (300) according to any of claims 10 or 11.
